# EUROPÄISCHE PATENTSCHRIFT

(11) **EP 2 057 000 B1**
(45) Veröffentlichungstag und Bekanntmachung des Hinweises auf die Patenterteilung: **11.01.2017**
(21) Anmeldenummer: 07802540.0
(22) Anmeldetag: 08.08.2007
(51) Int. Cl.: B29C 33/42, B29C 33/40, B41C 1/05, B41N 1/14, C14C 11/00, B29C 59/16, B44C 1/22

(54) **MATRIZEN MIT EINER KENNZEICHNUNG ZUR HERSTELLUNG VON DEKOR-ZURICHTUNGEN**
MATRICES WITH AN IDENTIFICATION FOR PRODUCING DECORATING DRESSINGS
MATRICES COMPRENANT UNE CARACTÉRISATION POUR LA FABRICATION D'APPRÊTS DE DÉCORATION

(30) Priorität: 10.08.2006 DE 102006037415
(43) Veröffentlichungstag der Anmeldung: 13.05.2009
(73) Patentinhaber: BASF SE, 67056 Ludwigshafen am Rhein (DE)
(72) Erfinder: TAEGER, Tilmann Lüdecke, 64342 Seeheim-Jugenheim (DE); SCHULTZE, Klaus, 67227 Frankenthal (DE); SCHADEBRODT, Jens, 55129 Mainz (DE)
(74) Vertreter: BASF IP Association
(86) Internationale Anmeldenummer: PCT/EP2007/058235
(87) Internationale Veröffentlichungsnummer: WO 2008/017690

(56) Entgegenhaltungen:
- WO-A-2005/047549
- WO-A-2007/033968
- DE-A1- 2 111 628
- FR-A- 2 257 401
- US-A- 5 798 202
- US-A1- 2004 115 562

## Beschreibung

### Beschreibung

Die vorliegende Erfindung betrifft Matrizen mit einer Kennzeichnung (z. B. Sicherheitsmerkmal, Logo) für die Herstellung einer mit einem flächigen Träger, insbesondere einem Leder oder einem Textilmaterial, wie einem Vlies, Gewebe oder Gewirke, oder einer Holzoberfläche, verbindbaren Beschichtung (Dekor-Zurichtungen), die durch Auftragen eines flüssigen Kunststoffmaterials auf die Oberfläche der Matrize und anschließender Verfestigung des Kunststoffmaterials gebildet wird, wobei die Kennzeichnung auf die Beschichtung übertragen wird. Die Erfindung betrifft weiterhin ein Verfahren zur Herstellung der Matrizen mittels Lasergravur. Die Erfindung betrifft weiterhin lasergravierte Matrizen mit der Kennzeichnung, die nach dem Verfahren erhältlich sind.

Bei der Technik der Laser-Direktgravur wird in eine Materialoberfläche direkt eine dreidimensionale Struktur eingraviert. Breiteres wirtschaftliches Interesse hat diese Technik erst in den letzten Jahren mit dem Aufkommen von verbesserten Lasersystemen gewonnen. Zu den Verbesserungen bei den Lasersystemen zählen bessere Fokussierbarkeit des Laserstrahls, höhere Leistung sowie computergesteuerte Strahlführung.

Die Laser-Direktgravur weist gegenüber konventionellen, z. B. mechanischen Strukturierungsverfahren mehrere Vorteile auf. Beispielsweise lassen sich dreidimensionale Motivelemente bei der Lasergravur-Technik individuell gestalten. Bestimmte Elemente können z. B. bezüglich Tiefe und Steilheit anders aufgebaut werden als andere Elemente. Weiterhin lässt sich mittels der Lasergravur-Technik prinzipiell jede digitale Motivvorlage nach geeigneter Umsetzung in ein dreidimensionales Reliefbild in eine Materialoberfläche gravieren, während bei konventionellen Strukturierungstechniken die dreidimensionale Form von Elementen entweder durch eine natürliche dreidimensionale Vorlage oder die Geometrie des abbildenden Werkzeugs beschränkt ist. Schließlich ist der Prozess der Lasergravur hochgradig automatisierbar, so dass der Gesamtprozess weniger anfällig gegen individuelle Fehler ist und sehr gut reproduzierbar ist. Auf diese Weise können strukturierte Materialien in hoher gleich bleibender Qualität hergestellt werden.

EP-A 0 640 043 und EP-A 0 640 044 offenbaren einschichtige beziehungsweise mehrschichtige elastomere lasergravierbare Aufzeichnungselemente zur Herstellung von Flexodruckplatten. Die Elemente bestehen aus verstärkten elastomeren Schichten. Zur Herstellung der Schicht werden elastomere Bindemittel, insbesondere thermoplastische Elastomere, wie SBS-, SIS- oder SEBS-Blockcopolymere eingesetzt. Durch die so genannte Verstärkung wird die mechanische Festigkeit der Schicht erhöht, um Flexodruck zu ermöglichen. Die Verstärkung wird entweder durch Einbringen geeigneter Füllstoffe, fotochemische oder thermochemische Vernetzung oder Kombinationen davon erreicht.

In WO 2005/047549 ist ein Verfahren zur Herstellung einer Zurichtung für Leder beschrieben, bei dem die Zurichtung auf einer Unterlage aus Silikonkautschuk hergestellt wird, wobei die Unterlage eine der Narbenstruktur der Zurichtung entsprechende strukturierte Oberfläche aufweist. Ferner ist ein Verfahren zur Herstellung eines an seiner Sichtseite mit einer eine Narbenstruktur aufweisenden Zurichtung versehenen Trägers, insbesondere eines Narbenleders, eines Spaltleders mit geschliffener Oberseite oder eines synthetischen Veloursmaterials mit einer aus Mikrofasern bestehenden Oberseite, offenbart, wobei zunächst zur Bildung der Zurichtung eine wässrige Kunststoffdispersion auf eine aus Silikonkautschuk bestehende Unterlage, welche eine der Narbenstruktur der Zurichtung entsprechende strukturierte Oberfläche aufweist, aufgebracht und zu einem Film verfestigen gelassen wird.

US 6,177,198 B1 offenbart ein Verfahren zur Herstellung einer mehrschichtigen Zurichtung aus einer Polyurethan-Dispersion für Leder, bei dem die Zurichtung auf einer Unterlage aus Silikonkautschuk mit einer der Narbenstruktur der Zurichtung entsprechenden Oberflächenstruktur hergestellt wird. Offenbart wird auch, dass die Zurichtung eine Darstellung, beispielsweise ein Logo, aufweisen kann.

DE-T2-69301240 zeigt einen weiteren bekannten Stand der Technik. Produktpiraterie ist zu einem ernsten Problem für die Wirtschaft geworden. Moderne Produktionstechniken und der weltweite Austausch von Gütern machen es heute leicht, gewinnbringende Produkte nahezu identisch nachzuahmen und in lukrative Märkte des In- und Auslandes einzuschleusen. Betroffen sind unter anderem die Produkte der Leder-, Textil-, Schuh-, Bekleidungsindustrie und Möbelindustrie. Es ist daher wünschenswert, die oberflächenstrukturierten Dekor-Zurichtungen mit einem nur schwer nachzuahmenden Sicherheitskennzeichen zu versehen.

Aufgabe der Erfindung ist es, Matrizen für die Herstellung von oberflächenstrukturierten Dekor-Zurichtungen wie Zurichtungen zum Beschichten von Leder bereitzustellen, welche ein Sicherheitsmerkmal, Logo oder sonstige Kennzeichnung aufweisen und somit die Authentizität der Ware garantieren, wobei die Matrizen schwer nachzuahmen sein sollen. Die Beschichtungen sollen die heutigen hohen Anforderungen bezüglich Wasserpermeabilität, Echtheit, Abriebbeständigkeit und Haptik erfüllen. Insbesondere sollen die Beschichtungen auch den hohen Anforderungen der Automobilindustrie an Echtheit und Haptik für die Innenausstattung genügen.

Gelöst wird die Aufgabe durch eine Matrize für die Herstellung einer mit einem flächigen Träger, insbesondere einem Leder, einem Lederersatzstoff, einem Textilmaterial oder einer Holzoberfläche, verbindbaren oberflächenstrukturierten Beschichtung (Zurichtung), die durch Auftragen eines flüssigen Kunststoffmaterials auf die Oberfläche der Matrize und anschließender Verfestigung des Kunststoffmaterials gebildet wird, wobei die Matrize eine der Oberflächenstruktur der Beschichtung entsprechende Oberflächenstruktur aufweist, wobei die Oberfläche auf einem Untergrund in einem Raster angeordnete Oberflächenstrukturelemente, welche als Erhebungen oder Vertiefungen ausgebildet sein können, umfasst, wobei die Oberflächenstruktur der Matrize eine markenmäßige Kennzeichnung mit einer von der Umgebung abweichenden Oberflächenstruktur aufweist, wobei die Kennzeichnung dadurch erzeugt wird, dass im Bereich der Kennzeichnung die Oberflächenstrukturelemente hinsichtlich Größe, Form und/oder Anordnung von den die Kennzeichnung umgebenden Oberflächenstrukturelementen abweichen, oder die Kennzeichnung dadurch erzeugt wird, dass im Bereich der Kennzeichnung die Rauhigkeit des Untergrunds (Oberflächen-Feinstruktur) von derjenigen der Umgebung abweicht.

Die Matrize ist mit dem nachstehend beschriebenen Verfahren mit den Schritten a) bis c) erhältlich.

Durch die im Bereich der Kennzeichnung abweichende Oberflächenstruktur wird eine im Bereich der Kennzeichnung von der Umgebung abweichende Lichtbrechung, Lichtstreuung oder Lichtreflexion der Oberfläche hervorgerufen, wodurch die Kennzeichnung sichtbar wird.

Kennzeichnungen sind beispielsweise Schriftzüge und Logos sowie beliebige Zeichen, die zur Kennzeichnung der Ware dienen können.

Die Oberfläche kann neben der durch die Oberflächenstrukturelemente gebildeten Oberflächen-Grobstruktur noch eine Oberflächen-Feinstruktur, beispielsweise eine Mikrorauhigkeit des Untergrundes, aufweisen. Die Kennzeichnung kann sowohl durch eine Abweichung in der Oberflächen-Grobstruktur als auch in der Oberflächen-Feinstruktur (z. B. Rauhigkeit des Untergrunds) von derjenigen der Umgebung der Kennzeichnung erzeugt werden.

In einer Ausführungsform der Erfindung wird die Kennzeichnung dadurch erzeugt, dass im Bereich der Kennzeichnung die Oberflächenstrukturelemente hinsichtlich Größe, Form und/oder Anordnung von den die Kennzeichnung umgebenden Oberflächenstrukturelementen abweichen.

In einer weiteren Ausführungsform der Erfindung wird die Kennzeichnung dadurch erzeugt, dass im Bereich der Kennzeichnung die Rauhigkeit des Untergrunds (Oberflächen-Feinstruktur) von derjenigen der Umgebung abweicht.

Die Oberflächenstrukturelemente können innerhalb der Kennzeichnung hinsichtlich ihrer Größe, insbesondere in Durchmesser und/ober Höhe, von den Oberflächenstrukturelementen außerhalb der Kennzeichnung abweichen. So können die Oberflächenstrukturelemente im Bereich der Kennzeichnung relativ zum Untergrund höher oder niedriger und/oder einen größeren oder kleineren Durchmesser aufweisen als außerhalb der Kennzeichnung. Auch kann der Untergrund im Bereich der Kennzeichnung niedriger oder höher sein als außerhalb der Kennzeichnung.

Die Oberflächenstrukturelemente innerhalb und außerhalb der Kennzeichnung können sich hinsichtlich ihrer Form unterscheiden. Beispielsweise können die Oberflächenstrukturelemente innerhalb der Kennzeichnung kreisrund und außerhalb der Kennzeichnung quadratisch sein. Sie können sich auch innerhalb und außerhalb der Kennzeichnung hinsichtlich ihrer Flankenform unterscheiden.

Die Oberflächenstrukturelemente können hinsichtlich ihrer Anordnung verschieden sein. So kann sich der Rastertyp innerhalb und außerhalb der Kennzeichnung unterscheiden. Bei autotypischen Rastern kann sich die Rasterwinkelung unterscheiden. Weiterhin können die Rasterpunktabstände innerhalb und außerhalb der Kennzeichnung verschieden sein. So können die Oberflächenstrukturelemente dichter oder weniger dicht angeordnet sein. Weiterhin können die Rasterpunktpositionen im Bereich des Kennzeichens relativ zu dem Raster außerhalb der Kennzeichnung verschoben sein.

Die Kennzeichnung kann eine markenmäßige Kennzeichnung sein. Bevorzugt ist die Kennzeichnung ein Schriftzug, beispielsweise ein Markenname, oder ein Logo.

Gelöst wird die Aufgabe weiterhin durch ein Verfahren zur Herstellung von erfindungsgemäßen Matrizen für die Herstellung einer mit einem flächigen Träger, insbesondere einem Leder oder einem Textilmaterial, wie einem Vlies, Gewebe oder Gewirke, verbindbaren oberflächenstrukturierten Beschichtung, welche eine Kennzeichnung aufweisen, wobei die Oberflächenstruktur der Matrize durch Lasergravur erzeugt wird. Hierzu weist die Matrize eine lasergravierbare Schicht auf. Von besonderem Vorteil ist der Prozess der Laserstrukturierung auch, da sich sehr leicht Logos, Warenzeichen, latente Bilder oder Design-Elemente in die Oberflächenstrukturierung bereits auf digitaler Ebene einbinden und in einem Arbeitsgang erzeugen lassen.

Das erfindungsgemäße Verfahren nach Anspruch 1 umfasst das
a) Bereitstellen einer lasergravierbaren elastomeren Schicht oder eines Schichtverbunds umfassend eine lasergravierbare elastomere Schicht, gegebenenfalls auf einem Träger, wobei die lasergravierbare Schicht ein Bindemittel sowie weitere Zusatz- und Hilfsstoffe umfasst,
b) die thermochemische, photochemische oder aktinische Verstärkung der lasergravierbaren elastomeren Schicht, und
c) das Eingravieren einer der Oberflächenstruktur der Zurichtung entsprechenden Oberflächenstruktur der Matrize in die lasergravierbare elastomere Schicht mit einem Laser.

Im Allgemeinen ist die lasergravierbare Schicht eine Polymerschicht. Diese kann auf einem Träger vorliegen. Voraussetzung zur Herstellung der Matrizen mittels Lasergravur ist, dass die Laserstrahlung von der Polymerschicht absorbiert wird. Ferner ist eine bestimmte Schwellenenergie des Laserstrahls, die in die Polymerschicht eingebracht werden muss, erforderlich, damit im Regelfalle eine Lasergravur möglich ist. Die Absorption der Aufzeichnungsschicht für die gewählte Laserstrahlung sollte möglichst hoch sein (typischerweise beträgt die mittlere Leistungsdichte >10 kW/cm², vorzugsweise > 100 kW/cm²).

Bei der Laserstrukturierung der Polymerschichten müssen große Mengen an Material abgetragen werden. Es sind daher leistungsstarke Laser bevorzugt. Zur Laserstrukturierung können beispielsweise CO₂-Laser mit einer Wellenlänge von 10640 nm eingesetzt werden. Es sind sehr leistungsstarke CO₂-Laser kommerziell erhältlich. Viele Polymere absorbieren im Regelfalle Strahlung mit einer Wellenlänge im Bereich um die 10 µm. Sie lassen sich somit gut mit CO₂-Laser gravieren. Zur Laserstrukturierung der Polymerschichten können ferner Festkörperlaser mit Wellenlängen um ca. 1 µm eingesetzt werden. Beispiele sind leistungsstarke Nd/YAG-Laser mit einer Wellenlänge von 1064 nm. Nd/YAG-Laser weisen gegenüber CO₂-Lasern den Vorteil auf, dass aufgrund der deutlich kürzeren Wellenlänge erheblich höhere Auflösungen möglich sind, somit also deutlich feinere Strukturen in die Oberfläche der Matrizen eingraviert werden können. Viele Polymere absorbieren die Wellenlänge von Festkörperlasern nicht oder nur in geringem Maße. Der lasergravierbaren Polymerschicht können dann zur Erhöhung der Empfindlichkeit IR-Strahlung absorbierende Substanzen beigemischt werden. Beim Einsatz von Nd/YAG-Lasern wird die Gravur durch den Einsatz von IR-Absorbern häufig erst ermöglicht, während beim Einsatz von CO₂-Lasern die Geschwindigkeit der Gravur erhöht werden kann. Geeignete Absorber umfassen stark gefärbte Pigmente wie Ruß oder IR absorbierende Farbstoffe, die üblicherweise stark farbig sind.

Zum Eingravieren der Oberflächenstruktur wird die lasergravierbare Schicht relativ zu dem Laser beziehungsweise dem den Laserstrahl oder Laserpuls emittierenden Bauteil des Lasers (nachfolgend auch abkürzend mit "Laser" bezeichnet) bewegt und der Laser entsprechend der Bewegung elektronisch moduliert, wodurch das gewünschte Muster erzeugt wird.

Beispielsweise kann die lasergravierbare Schicht oder ein geeigneter Schichtverbund auf einen Zylinder aufgebracht und der Zylinder in Rotation versetzt werden und der Zylinder in axialer Richtung bewegt und der Laser entsprechend der Bewegung des Zylinders elektronisch gesteuert moduliert werden. Es können aber auch die lasergravierbare Schicht beziehungsweise der Schichtverbund plan angeordnet werden und lasergravierbare Schicht und Laser in der Ebene der Schicht beziehungsweise des Schichtverbundes relativ zueinander bewegt werden und der Laser entsprechend der Relativbewegung elektronisch gesteuert moduliert werden.

Die lasergravierbare Schicht oder der Schichtverbund können auf einem Träger vorliegen, üblicherweise liegen sie auf einem Träger vor. Beispiele für geeignete Träger umfassen Gewebe und Folien aus Polyethylenterephthalat (PET), Polyethylennaphthalat (PEN), Polybutylenterephthalat, Polyethylen, Polypropylen, Polyamid oder Polycarbonat, bevorzugt PET- oder PEN-Folien. Ebenfalls als Träger geeignet sind Papiere und Gewirke, beispielsweise aus Cellulose. Als Träger können auch konische oder zylindrische Röhren aus den besagten Materialien, so genannte Sleeves, eingesetzt werden. Für Sleeves eignen sich auch Glasfasergewebe oder Verbundmaterialien aus Glasfasern und geeigneten polymeren Werkstoffen. Weiterhin geeignete Trägermaterialien sind metallische Träger wie beispielsweise massive oder gewebeförmige, flächige oder zylindrische Träger aus Aluminium, Stahl, magnetisierbarem Federstahl, Eisenlegierungen oder Nickel.

Der Träger kann zur besseren Haftung der lasergravierbaren Schicht optional mit einer Haftschicht beschichtet sein.

Die lasergravierbare Schicht umfasst mindestens ein Bindemittel, das auch ein Präpolymer sein kann, welches im Zuge einer thermochemischen Verstärkung zu einem Polymer reagiert. Geeignete Bindemittel werden vom Fachmann je nach den gewünschten Eigenschaften der lasergravierbaren Schicht beziehungsweise der Matrize, beispielsweise im Hinblick auf Härte, Elastizität oder Flexibilität ausgewählt. Geeignete Bindemittel lassen sich im Wesentlichen in drei Gruppen einteilen, ohne dass die Bindemittel hierauf beschränkt sein sollen.

Die erste Gruppe umfasst solche Bindemittel, die über ethylenisch ungesättigte Gruppen verfügen. Die ethylenisch ungesättigten Gruppen sind photochemisch, thermochemisch, mittels Elektronenstrahlen oder mit einer beliebigen Kombination dieser Prozesse vernetzbar. Zusätzlich kann eine mechanische Verstärkung mittels Füllstoffen vorgenommen werden. Derartige Bindemittel sind beispielsweise solche, die 1,3-Dien-Monomere wie Isopren oder Butadien einpolymerisiert enthalten. Die ethylenisch ungesättigte Gruppe kann dabei einmal als Kettenbaustein des Polymeren fungieren (1,4-Einbau), oder sie kann als Seitengruppe (1,2-Einbau) an die Polymerkette gebunden sein. Als Beispiele seien Naturkautschuk, Polybutadien, Polyisopren, Styrol-Butadien-Kautschuk, Nitril-Butadien-Kautschuk, Acrylnitril-Butadien-Styrol (ABS) Polymer, Butyl-Kautschuk, Styrol-Isopren-Kautschuk, Polychloropren, Polynorbornen-Kautschuk, Ethylen-Propylen-Dien-Kautschuk (EPDM) oder Polyurethan-Elastomere mit ethylenisch ungesättigten Gruppen genannt.

Weitere Beispiele umfassen thermoplastisch elastomere Blockcopolymere aus Alkenylaromaten und 1,3-Dienen. Bei den Blockcopolymeren kann es sich sowohl um lineare Blockcopolymere oder auch um radiale Blockcopolymere handeln. Üblicherweise handelt es sich um Dreiblockcopolymere vom A-B-A-Typ, es kann sich aber auch um Zweiblockpolymere vom A-B-Typ handeln, oder um solche mit mehreren alternierenden elastomeren und thermoplastischen Blöcken, z. B. A-B-A-B-A. Es können auch Gemische zweier oder mehrerer unterschiedlicher Blockcopolymere eingesetzt werden. Handelsübliche Dreiblockcopolymere enthalten häufig gewisse Anteile an Zweiblockcopolymeren. Die Dien-Einheiten können 1,2- oder 1,4-verknüpft sein. Es können sowohl Blockcopolymere vom Styrol-Butadien wie vom Styrol-Isopren-Typ eingesetzt werden. Sie sind beispielsweise unter dem Namen Kraton^{®} im Handel erhältlich. Weiterhin einsetzbar sind auch thermoplastisch elastomere Blockcopolymere mit Endblöcken aus Styrol und einem statistischen Styrol-Butadien-Mittelblock, die unter dem Namen Styroflex^{®} erhältlich sind.

Weitere Beispiele von Bindemitteln mit ethylenisch ungesättigten Gruppen umfassen modifizierte Bindemittel, bei denen vernetzbare Gruppen durch Pfropfungsreaktionen in das polymere Molekül eingeführt werden.

Die zweite Gruppe umfasst solche elastomeren Bindemittel, die über funktionelle Gruppen verfügen. Die funktionellen Gruppen sind thermochemisch, mittels Elektronenstrahlen, photochemisch oder mit einer beliebigen Kombination dieser Prozesse vernetzbar. Zusätzlich kann eine mechanische Verstärkung mittels Füllstoffen vorgenommen werden. Beispiele geeigneter funktioneller Gruppen umfassen -Si(HR)O-, -Si(RR')O-, -OH, -NH₂, -NHR, -COOH, -COOR, -COHN₂, -O-C(O)NHR, -SO₃H oder -CO-. Beispiele von Bindemitteln umfassen Silikonelastomere, Acrylat-Kautschuke, Ethylen-Acrylat-Kautschuke, Ethylen-Acrylsäure-Kautschuke oder Ethylen-Vinylacetat-Kautschuke sowie deren teilweise hydrolysierte Derivate, thermoplastisch elastomere Polyurethane, sulfonierte Polyethylene oder thermoplatisch elastomere Polyester.

Selbstverständlich können auch elastomere Bindemittel eingesetzt werden, die sowohl über ethylenisch ungesättigte Gruppen wie über funktionelle Gruppen verfügen. Beispiele umfassen additionsvernetzende Silikonelastomere mit funktionellen und ethylenisch ungesättigten Gruppen, Copolymere von Butadien mit (Meth)acrylaten, (Meth)acrylsäure oder Acrylnitril, sowie weiterhin Copolymere beziehungsweise Blockcopolymere von Butadien oder Isopren mit funktionelle Gruppen aufweisenden Styrolderivaten, beispielsweise Blockcopolymere aus Butadien und 4-Hydroxystyrol.

Die dritte Gruppe von Bindemitteln umfasst solche, die weder über ethylenisch ungesättigte Gruppen noch über funktionelle Gruppen verfügen. Zu nennen sind hier beispielsweise Polyolefine oder Ethylen/Propylen-Elastomere oder durch Hydrierung von Dien-Einheiten erhaltene Produkte, wie beispielsweise SEBS-Kautschuke.

Polymerschichten, die Bindemittel ohne ethylenisch ungesättigte oder funktionelle Gruppen enthalten, müssen in der Regel mechanisch, mit Hilfe energiereicher Strahlung oder einer Kombination daraus verstärkt werden, um eine optimal scharfkantige Strukturierbarkeit mittels Laser zu ermöglichen.

Es können selbstverständlich auch Gemische zweier oder mehrerer Bindemittel eingesetzt werden, wobei es sich dabei sowohl um Bindemittel aus jeweils nur einer der geschilderten Gruppen handeln kann oder auch um Gemische von Bindemitteln aus zwei oder allen drei Gruppen. Die Kombinationsmöglichkeiten sind nur insofern beschränkt, als die Eignung der Polymerschicht für den Laserstrukturierungsprozess und den Abformvorgang nicht negativ beeinflusst werden darf. Vorteilhaft kann beispielsweise ein Gemisch von mindestens einem elastomeren Bindemittel, welches keine funktionellen Gruppen aufweist, mit mindestens einem weiteren Bindemittel, welches funktionelle Gruppen oder ethylenisch ungesättigte Gruppen aufweist, eingesetzt werden.

Die Menge des oder der elastomeren Bindemittel in der elastomeren Schicht beträgt üblicherweise 30 Gew.-% bis 99 Gew.-% bezüglich der Summe aller Bestandteile, bevorzugt 40 bis 95 Gew.-%, und ganz besonders bevorzugt 50 bis 90 Gew.-%.

Optional kann die lasergravierbare Polymerschicht auch noch reaktive niedermolekulare oder oligomere Verbindungen umfassen. Oligomere Verbindungen weisen im Allgemeinen ein Molekulargewicht von nicht mehr als 20 000 g/mol auf. Reaktive niedermolekulare und oligomere Verbindungen sollen im Folgenden der Einfachheit halber als Monomere bezeichnet werden.

Monomere können einerseits zugesetzt werden, um die Geschwindigkeit der fotochemischen oder thermochemischen Vernetzung oder der Vernetzung mittels energiereicher Strahlung zu erhöhen, sofern dies gewünscht wird. Bei Verwendung von elastomeren Bindemitteln aus der ersten und zweiten Gruppe ist der Zusatz von Monomeren zur Beschleunigung im Allgemeinen nicht zwingend notwendig. Bei elastomeren Bindemitteln aus der dritten Gruppe ist der Zusatz von Monomeren im Regelfalle empfehlenswert, ohne dass dies zwingend in jedem Falle notwendig wäre.

Unabhängig von der Frage der Vernetzungsgeschwindigkeit können Monomere auch zur Steuerung der Vernetzungsdichte eingesetzt werden. Je nach Art und Menge der zugesetzten niedermolekularen Verbindungen werden weitere oder engere Netzwerke erhalten. Als Monomere können einerseits bekannte ethylenisch ungesättigte Monomere eingesetzt werden. Die Monomeren sollen mit den Bindemitteln im Wesentlichen verträglich sein und mindestens eine fotochemisch oder thermochemisch reaktive Gruppe aufweisen. Sie sollten nicht leichtflüchtig sein. Bevorzugt beträgt der Siedepunkt geeigneter Monomerer nicht weniger als 150 °C. Besonders geeignet sind Ester und Amide der Acrylsäure oder Methacrylsäure mit mono- oder polyfunktionellen Alkoholen, Aminen, Aminoalkoholen oder Hydroxyethern und -estern, Styrol oder substituierte Styrole, Ester der Fumar- oder Maleinsäure oder Allylverbindungen. Beispiele umfassen Butylacrylat, 2-Ethylhexylacrylat, Laurylacrylat, 1,4-Butandioldiacrylat, 1,6-Hexandioldiacrylat, 1,6-Hexandioldimethacrylat, 1,9-Nonandioldiacrylat, Trimethylolpropantrimethacrylat, Trimethylolpropantriacrylat, Dipropylenglykoldiacrylat, Tripropylenglykoldiacrylat, Dioctylfumarat, N-Dodecylmaleimid und Triallylisocyanurat.

Insbesondere für die thermochemische Verstärkung geeignete Monomere umfassen reaktive niedermolekulare Silikone wie beispielsweise zyklische Siloxane, Si-H-funktionelle Siloxane, Siloxane mit Alkoxy- oder Estergruppen, schwefelhaltige Siloxane und Silane, Dialkohole wie beispielsweise 1,4 Butandiol, 1,6-Hexandiol, 1,8 Octandiol, 1,9 Nonandiol, Diamine wie beispielsweise 1,6-Hexandiamin, 1,8-Octandiamin, Aminoalkohole wie beispielsweise Ethanolamin, Diethanolamin, Butylethanolamin, Dicarbonsäuren wie beispielsweise 1,6-Hexandicarbonsäure, Terephthalsäure, Maleinsäure oder Fumarsäure.

Es können auch Monomere eingesetzt werden, die sowohl ethylenisch ungesättigte Gruppen wie funktionelle Gruppen aufweisen. Als Beispiele seinen ω-Hydroxyalkylacrylate genannt, wie beispielsweise Ethylenglykolmono(meth)acrylat, 1,4-Butandiolmono(meth)acrylat oder 1,6-Hexandiolmono(meth)acrylat.

Selbstverständlich können auch Gemische verschiedener Monomerer eingesetzt werden, vorausgesetzt, die Eigenschaften der elastomeren Schicht werden durch die Mischung nicht negativ beeinflusst. Im Regelfalle beträgt die Menge zugesetzter Monomerer 0 bis 40 Gew.-% bezüglich der Menge aller Bestandteile der Aufzeichnungsschicht, bevorzugt 0 bis 20 Gew.-%.

Die elastomere lasergravierbare Schicht kann weiterhin auch noch Zusatzstoffe und Hilfsstoffe wie beispielsweise IR-Absorber, Farbstoffe, Dispergierhilfsmittel, Antistatika, Weichmacher oder abrasive Partikel umfassen. Die Menge derartiger Zusätze sollte im Regelfalle aber 30 Gew.-% bezüglich der Menge aller Komponenten der elastomeren Schicht nicht überschreiten.

Die lasergravierbare Schicht kann auch aus mehreren Einzelschichten aufgebaut werden. Diese Teilschichten können von gleicher, in etwa gleicher oder von unterschiedlicher stofflicher Zusammensetzung sein. Die Dicke der lasergravierbaren Schicht beziehungsweise aller Einzelschichten zusammen beträgt im Regelfalle zwischen 0,1 und 10 mm, bevorzugt 0,5 bis 3 mm. Die Dicke wird vom Fachmann abhängig von anwendungstechnischen und maschinentechnischen Prozessparametern des Lasergravurvorgangs und des Abformvorgangs geeignet gewählt.

Die lasergravierbare Schicht kann optional weiterhin noch eine Oberschicht mit einer Dicke von nicht mehr als 300 µm aufweisen. Die Zusammensetzung einer solchen Oberschicht kann im Hinblick auf optimale Gravierbarkeit und mechanische Stabilität ausgewählt werden, während die Zusammensetzung der darunterliegenden Schicht im Hinblick auf optimale Härte oder Elastizität ausgewählt wird. Die Oberschicht muss entweder selbst lasergravierbar sein, oder zumindest im Zuge der Lasergravur zusammen mit der darunter liegenden Schicht entfernbar sein. Sie umfasst mindestens ein polymeres Bindemittel. Sie kann weiterhin einen Absorber für Laserstrahlung oder auch Monomere oder Hilfsmittel umfassen.

Das Ausgangsmaterial für das Verfahren kann beispielsweise durch Lösen beziehungsweise Dispergieren aller Komponenten in einem geeigneten Lösemittel und Aufgießen auf einen Träger hergestellt werden. Bei mehrschichtigen Elementen können in prinzipiell bekannter Art und Weise mehrere Schichten aufeinander gegossen werden. Wenn "nass-in-nass" gearbeitet wird, verbinden sich die Schichten gut miteinander. Auch eine Oberschicht kann aufgegossen werden. Alternativ können die Einzelschichten beispielsweise auf temporäre Träger gegossen und die Schichten anschließend durch Kaschieren miteinander verbunden werden. Nach dem Gießen kann noch optional eine Deckfolie zum Schutz vor Beschädigungen des Ausgangsmaterials aufgebracht werden.

Von ganz besonderem Vorteil werden für das erfindungsgemäße Verfahren aber thermoplastisch elastomere Bindemittel oder Silikonelastomere eingesetzt. Bei Verwendung thermoplastisch elastomerer Bindemittel erfolgt die Herstellung bevorzugt durch Extrudieren zwischen eine Trägerfolie und eine Deckfolie oder ein Deckelement gefolgt von Kalandrieren, wie beispielsweise für Flexodruckelemente in EP-A 084 851 offenbart. Auf diese Art und Weise lassen sich auch dickere Schichten in einem einzigen Arbeitsgang herstellen. Mehrschichtige Elemente können mittels Coextrusion hergestellt werden.

Die lasergravierbare Schicht wird vor der Lasergravur durch Erwärmen (thermochemisch), durch Bestrahlen mit UV-Licht (photochemisch) oder durch Bestrahlen mit energiereicher Strahlung (aktinisch) oder einer beliebigen Kombination davon verstärkt.

Anschließend wird die Schicht oder der Schichtverbund auf einen zylindrischen (temporären) Träger, beispielsweise aus Kunststoff, glasfaserverstärktem Kunststoff, Metall oder Schaum, beispielsweise mittels Klebeband, Unterdruck, Klemmvorrichtungen oder Magnetkraft, aufgebracht und wie oben beschrieben graviert. Alternativ kann auch die plane Schicht beziehungsweise der Schichtverbund wie oben beschrieben graviert werden. Optional wird während des Lasergravurvorgangs oder nach dem Lasergravurvorgang die lasergravierbare Schicht mit einem Rundwascher oder einem Durchlaufwascher mit einem Reinigungsmittel zur Entfernung von Gravurrückständen gewaschen.

Auf die beschriebene Weise kann die Matrize als Negativmatrize oder als Positivmatrize hergestellt werden.

In einer ersten Variante weist die Matrize eine Negativ-Struktur auf, so dass die mit einem flächigen Träger, beispielsweise einem Leder, verbindbare Beschichtung direkt durch Auftragen eines flüssigen Kunststoffmaterials auf die Oberfläche der Matrize und anschließender Verfestigung des Kunststoffmaterials erhalten werden kann.

In einer zweiten Variante weist die Matrize eine Positiv-Struktur auf, so dass zunächst eine Negativmatrize durch Abformung von der laserstrukturierten Positivmatrize hergestellt wird. Von dieser Negativmatrize kann die mit einem flächigen Träger verbindbare Beschichtung anschließend durch Auftragen eines flüssigen Kunststoffmaterials auf die Oberfläche der Negativmatrize und anschließender Verfestigung des Kunststoffmaterials erhalten werden.

Vorzugsweise werden in die Matrize Oberflächenstrukturelemente mit Abmessungen im Bereich von 10 bis 500 µm eingraviert. Die Strukturelemente können als Erhebungen oder Vertiefungen ausgebildet sein. Vorzugsweise haben die Strukturelemente eine einfache geometrische Form und sind beispielsweise Kreise, Ellipsen, Quadrate, Rauten, Dreiecke und Sterne. Die Strukturelemente können ein regelmäßiges oder unregelmäßiges Raster bilden. Beispiele sind ein klassisches (autotypisches) Punktraster oder ein stochastisches Raster, beispielsweise ein frequenzmoduliertes Raster oder ein frequenz- und amplitudenmoduliertes Raster.

Hierbei ist ein autotypisches Raster ein regelmäßiges Raster, bei dem der Mittenabstand der Rasterelemente einen definierten Wert und der Winkel der Rasterachsen einen definierten Wert aufweist.

Bei einem frequenzmodulierten Raster ist die Größe der Rasterelemente konstant, aber Abstand und Winkel der Elemente variieren statistisch.

Bei einem amplitudenmodulierten Raster variiert die Größe der Rasterelemente statistisch.

Wie oben ausgeführt, kann das Kennzeichen dadurch erzeugt werden, indem der Rastertyp (autotypisches oder stochastisches Raster) variiert wird oder - bei einem autotypischen Raster - der Winkel der Rasterachsen variiert wird.

Beispielsweise kann die Matrize so graviert werden, dass sie "Näpfchen" (Vertiefungen) aufweist, welche einen Durchmesser von 10 - 500 µm an der Oberfläche der Matrize aufweisen. Vorzugsweise beträgt der Durchmesser 20 - 250 µm und besonders bevorzugt 30 - 150 µm. Der Abstand der Näpfchen beträgt im Allgemeinen 10 - 500 µm, vorzugsweise 20 - 200 µm, besonders bevorzugt 20 - 80 µm. Die Tonwerte des Rasters liegen im Allgemeinen zwischen 3 % und 50 %.

Ganz besonders bevorzugte Raster für Matrizen zur Herstellung von Lederzurichtungen sind wie folgt charakterisiert:
Handelt es sich um eine Negativmatrize, werden für die Erzeugung der Grobstruktur bevorzugt die folgenden Muster in die Oberfläche der Matrize eingraviert:
   invertierte autotypische Raster mit im Wesentlichen kreisförmiger Rasterpunktform; Rasterpunktdurchmesser bevorzugt von 20 bis 250 µm, besonders bevorzugt 20 bis 80 µm;
   invertierte frequenzmodulierte oder frequenz- und amplitudenmodulierte Raster mit im Wesentlichen kreisförmiger Rasterpunktform, Rasterpunktdurchmesser bevorzugt von 20 bis 150 µm; Tonwerte bevorzugt 3 bis 40 %, besonders bevorzugt 5 bis 30 %.

Handelt es sich um eine Positivmatrize, werden für die Erzeugung der Grobstruktur bevorzugt die folgenden Muster in die Oberfläche der Matrize eingraviert:
autotypische Raster mit im Wesentlichen kreisförmiger Rasterpunktform, Rasterpunktdurchmesser bevorzugt von 20 bis 250 µm, besonders 20 bis 80 µm;
frequenzmodulierte oder frequenz- und amplitudenmodulierte Raster mit im Wesentlichen kreisförmiger Rasterpunktform, Rasterpunktdurchmesser bevorzugt von 20 bis 150 µm, Tonwerte bevorzugt 3 bis 40 %, besonders bevorzugt 5 bis 30 %.

Die Näpfchen können aber auch einen anderen Querschnitt aufweisen, beispielsweise einen elliptischen oder polygonalen Querschnitt. Die Tiefe der Näpfchen beträgt im Regelfall 20 bis 500 µm, bevorzugt 30 bis 200 µm und besonders bevorzugt 60 bis 200 µm. Eine derartige Matrize wird im Allgemeinen als Negativmatrize zur Herstellung von Leder-Zurichtungen verwendet. Eine entsprechende Positiv-Matrize kann ebenfalls durch Lasergravur hergestellt werden. Diese weist die beschriebenen Strukturelemente als Erhebungen ("Härchen") auf. Diese weisen den oben beschriebenen Negativ-Strukturelementen (Vertiefungen) entsprechende Abmessungen auf.

Die Matrize weist vorzugsweise neben einer Oberflächen-Grobstruktur noch eine Oberflächen-Feinstruktur auf. Sowohl Grob- als auch Feinstruktur können durch Lasergravur erzeugt werden. Die Feinstruktur wird durch Lasergravur erzeugt, falls eine innerhalb und außerhalb der Kennzeichnung verschiedene Feinstruktur erzeugt werden soll. Die Feinstruktur kann beispielsweise eine Mikrorauhigkeit mit einer Rauhigkeitsamplitude im Bereich von 1 bis 30 µm und einer Rauhigkeitsfrequenz von 0,5 bis 30 µm sein. Bevorzugt liegen die Dimensionen der Rauhigkeit im Bereich von 1 bis 20 µm, besonders bevorzugt 2 bis 15 µm und besonders bevorzugt 3 bis 10 µm.

Die Matrize weist vorzugsweise zusätzlich eine raue Oberfläche als Oberflächen-Feinstruktur auf, wobei die Dimensionen der Rauhigkeit der Oberflächen-Feinstruktur kleiner sind als die mittels Laserstrukturierung erzeugten Strukturelemente. Idealerweise ist die Rauhigkeit der Oberfläche der Matrize so ausgebildet, dass die durch Auftragen eines flüssigen Kunststoffmaterials auf die Oberfläche der Matrize und anschließendes Verfestigen des Kunststoffmaterials gebildete Beschichtung einen Glanzgrad nach DIN 67530 bei einem Einstrahlwinkel von 60° von weniger als 2,2 aufweist.

Eine raue Oberflächenstruktur kann entweder vor, während oder nach der Laserstrukturierung erzeugt werden. Beispielsweise kann die laserstrukturierbare Schicht vor dem Verstärkungsprozess mit einer rauen Oberfläche in Kontakt gebracht werden, so dass die Struktur dieser rauen Oberfläche auf der Matrize abgebildet wird, gegebenenfalls auch unter Anwendung von Temperatur und/oder Druck. Anschließend wird die Aufzeichnungsschicht wie beschrieben verstärkt.

Die Erfindung wird durch die nachstehenden Beispiele näher erläutert.

### Beispiele

### Laserstrukturierung der lasergravierbaren Schichten

In den Beispielen wurde zur Strukturierung der lasergravierbaren Schicht eine CO₂-Lasergravurmaschine vom Typ BDE 4131 (Fa. Stork Prints Austria GmbH, Kufstein) verwendet. Die Maschine verfügt über drei sealed CO₂-Laser mit einer Nennleistung von je 250 W, den entsprechenden optischen Komponenten sowie der zugehörigen Peripherie zur Steuerung, Laserkühlung, Ablufterfassung und Abluftbehandlung. Das zylindrische Aufnahmesystem besteht entweder aus einer dünnwandigen zylindrischen Metalltrommel oder aus Metallkonen, in die ein so genannter Drucksleeve, bestehend aus einem (meist mehrschichtig aufgebauten) zylindrischen Hohlzylinder aus einem oder mehreren Kunststoffen, eingespannt wird. Die Lasersteuerung erfolgt über einen verbundenen Steuerrechner mittels einer speziellen Ausgabesoftware. Die Ausgabesoftware interpretiert das als Graustufen-Bitmap vorliegende Motiv als pixelweises Höhenprofil. Jede Graustufe entspricht einer bestimmten Gravurtiefe beziehungsweise Gravurleistung am betreffenden Punkt des Motivs. Idealerweise ist der Zusammenhang zwischen Graustufenwert und Gravurtiefe ungefähr linear eingestellt.

### Beispiel 1

Als lasergravierbares Element wurde eine handelsübliche laserstrukturierbare Flexodruckplatte (nyloflex^{®} LD, Flint Group Germany GmbH) mit einer Gesamtschichtdicke von 1,14 mm eingesetzt. Die lasergravierbare Schicht umfasst auf der von der zu strukturierenden Oberfläche abgewandten Seite eine dimensionsstabile PET-Trägerfolie mit einer Schichtstärke von 0,19 mm.

Die unstrukturierte Schicht wurde auf einem zylindrischen Hohlzylinder aus Metall (Aufnahmetrommel) für die Dauer der Gravur fixiert. Während des Gravurprozesses wurde die Gravurtrommel mit der zu bearbeitenden Schicht gleichförmig relativ zum Laserstrahl in axialer Richtung verschoben. Auf diese Weise überstrich der Laserstrahl die gesamte zu bearbeitende Fläche der Matrize spiralförmig.

Die als Positivmatrize ("Patrize" oder "Vaterform", die das Gegenstück zur negativen Matrize bildet) dienende Schicht wurde mit folgendem Positiv-Motiv graviert. Dabei wurden die Bilddaten in jenen Motivbereichen, in denen das Sicherheitsmerkmal abgebildet werden sollte, wie in der Tabelle angegeben modifiziert.

| Motiv Nr. | Funktion | Motivtyp |
|---|---|---|
| 1 | stäbchenförmige | Härchen mit |
| | Erhebungen | Durchmesser = 86 µm |
| | | Mittenabstand = 110 µm |
| | ("Härchen") | Höhe = ∼170 µm |
| | | (entspricht in 2-dimensionaler Projektion einem autotypischen Raster von 130 Ipi bei 1778 dpi, Tonwert 15%; verwendete Rasterwinkelung = 30°) |
| 2 | Sicherheitsmerkmal | Schriftzug |
| | Variante A | Variante A: Im Bereich des Schriftzuges wurde die Gravurtiefe auf ∼120 µm verringert |

Auf diese Weise wurde eine Patrize mit ca. 2600 Härchen/cm² erzeugt, welche über ein zusätzliches Sicherheitsmerkmal in Form eines Schriftzuges verfügte, der nur im Untergrund in Form einer geringeren Gravurtiefe abgebildet war.

Die Positivmatrize wurde mit Wasser nachgereinigt und 30 min bei 65 °C getrocknet. Mit Hilfe eines bei Raumtemperatur härtenden, füllstoffhaltigen 2-Komponenten-Silikonelastomers wurde von der Positivmatrize eine Negativmatrize hergestellt, indem die beiden Komponenten intensiv miteinander vermischt und mit Hilfe einer Rakelbeschichtung auf die Positivmatrize aufgebracht wurden. Nach dem Aushärten bei Raumtemperatur für eine Dauer von 16 Stunden wurde die Negativmatrize durch Abziehen von der Positivmatrize erhalten.

Anschließend wurde gemäß WO 2005/035795 eine wässrige, Mikrohohlkugeln enthaltende Kunststoffdispersion auf die Negativmatrize aufgebracht und durch Entfernen des Wassers verfestigt. Die so erhaltene Kunststoff-Beschichtung wurde gemäß WO 2005/047549 mit Hilfe einer einzigen, eine netzartige Struktur aufweisenden Verbindungsschicht mit der Oberfläche eines Spaltleders verbunden.

Das erhaltene beschichtete Leder hatte eine optisch ansprechende, veloursartige Oberfläche mit sehr angenehmem Griff. Das Sicherheitsmerkmal Schriftzug konnte bei unterschiedlichen Licht-Einfallswinkeln unterschiedlich stark visuell erkannt werden, ohne dass sich die Haptik der Oberfläche in den Sicherheitsmerkmal-Bereichen merklich unterschied.

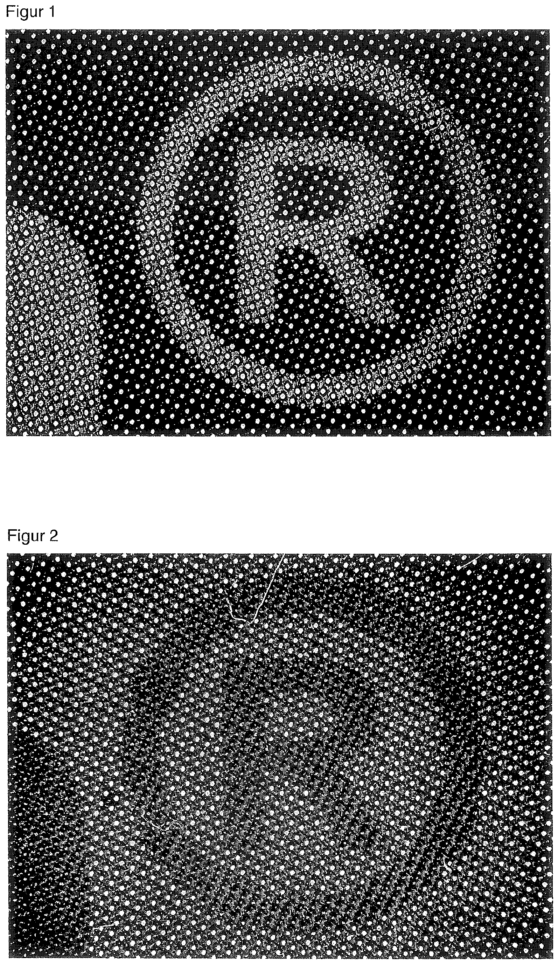

Ein mittels Mikroskop vergrößerter Oberflächenausschnitt der gravierten Positivmatrize ist in Figur 1 dargestellt.

### Beispiel 2

Analog Beispiel 1 wurde eine Positivmatrize mit einer Härchenstruktur hergestellt, wobei anstelle der in Beispiel 1 genannten Motivparameter die in der folgenden Tabelle aufgeführten Parameter verwendet wurden:

| Motiv Nr. | Funktion | Motivtyp |
|---|---|---|
| 1 | stäbchenförmige | Härchen mit |
| | Erhebungen | Durchmesser = 86 µm |
| | | Mittenabstand = 110 µm |
| | ('Härchen") | Höhe = ∼170 µm (entspricht in 2-dimensionaler Projektion einem autotypischen Raster von 130 Ipi bei 1778 dpi, Tonwert 15%; verwendete Rasterwinkelung = 30°) |
| 2 | Sicherheitsmerkmal | Schriftzug |
| | Variante B | Variante B: Im Bereich des Schriftzuges wurden die Spitzen der Härchen relativ zur Oberfläche der übrigen Härchen um etwa 15 µm tiefer gesetzt |

Auf diese Weise wurde eine Positivmatrize mit ca. 2600 Härchen/cm² erzeugt, welche über ein zusätzliches Sicherheitsmerkmal in Form eines Schriftzuges verfügte, der in Form von ca. 15 µm tiefer liegenden Härchen abgebildet war.

Analog Beispiel 1 wurde mittels Umkehrbeschichtung eine Negativmatrize aus der Positivmatrize erzeugt, mit deren Hilfe eine Zurichtungsschicht hergestellt werden konnte, die mit der Oberfläche eines Spaltleders verbunden wurde.

Das erhaltene beschichtete Leder hatte eine optisch ansprechende, veloursartige Oberfläche mit sehr angenehmem Griff. Das Sicherheitsmerkmal Schriftzug konnte bei unterschiedlichen Licht-Einfallswinkeln unterschiedlich stark visuell erkannt werden, wobei die Haptik der Oberfläche in den Sicherheitsmerkmal-Bereichen nur minimal abwich.

Ein mittels Mikroskop vergrößerter Oberflächenausschnitt der gravierten Positivmatrize ist in Figur 2 dargestellt.

### Beispiel 3

Analog Beispiel 1 wurde eine Postivmatrize mit einer Härchenstruktur hergestellt, wobei anstelle der in Beispiel 1 genannten Motivparameter die in der folgenden Tabelle aufgeführten Parameter verwendet wurden:

| Motiv Nr. | Funktion | Motivtyp |
|---|---|---|
| 1 | stäbchenförmige | Härchen mit |
| | Erhebungen | Durchmesser = 86 µm |
| | | Mittenabstand = 110 µm |
| | ('Härchen") | Höhe = ∼170 µm (entspricht in 2-dimensionaler Projektion einem autotypischen Raster von 130 Ipi bei 1778 dpi, Tonwert 15%; verwendete Rasterwinkelung = 30°) |
| 2 | Sicherheitsmerkmal | Schriftzug |
| | Variante C | Variante C: Im Bereich des Schriftzuges wurde ein Tonwert von 25% bei gleicher Rasterweite verwendet, so dass die Härchen im Bereich des Schriftzuges einen größeren Radius aufwiesen |

Auf diese Weise wurde eine Positivmatrize mit ca. 2600 Härchen/cm² erzeugt, welche über ein zusätzliches Sicherheitsmerkmal in Form eines Schriftzuges verfügte, der in Form von dickeren Härchen im Bereich des Schriftzuges abgebildet war.

Analog Beispiel 1 wurde mittels Umkehrbeschichtung eine Negativmatrize aus der Positivmatrize erzeugt, mit deren Hilfe eine Zurichtungsschicht hergestellt werden konnte, die mit der Oberfläche eines Spaltleders verbunden wurde.

Das erhaltene beschichtete Leder hatte eine optisch ansprechende, veloursartige Oberfläche mit sehr angenehmem Griff. Das Sicherheitsmerkmal Schriftzug konnte bei unterschiedlichen Licht-Einfallswinkeln unterschiedlich stark visuell erkannt werden, wobei die Haptik der Oberfläche in den Sicherheitsmerkmal-Bereichen nur minimal differenzierte.

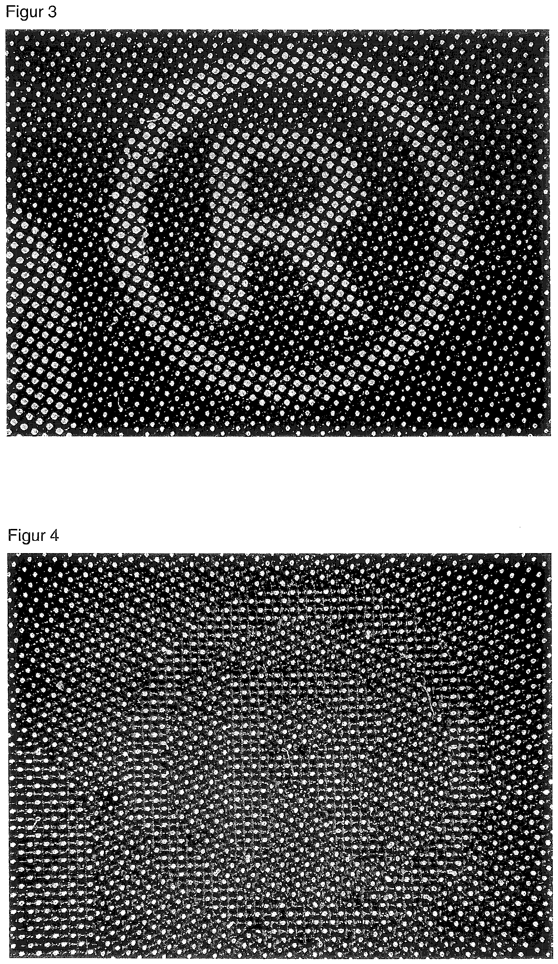

Ein mittels Mikroskop vergrößerter Oberflächenausschnitt der gravierten Positivmatrize ist in Figur 3 dargestellt.

### Beispiel 4

Analog Beispiel 1 wurde eine Positivmatrize mit einer Härchenstruktur hergestellt, wobei anstelle der in Beispiel 1 genannten Motivparameter die in der folgenden Tabelle aufgeführten Parameter verwendet wurden:

| Motiv Nr. | Funktion | Motivtyp |
|---|---|---|
| 1 | stäbchenförmige | Härchen mit |
| | Erhebungen | Durchmesser = 86 µm |
| | | Mittenabstand = 110 µm |
| | ('Härchen") | Höhe = ∼170 µm |
| | | (entspricht in 2-dimensionaler Projektion einem autotypischen Raster von 130 Ipi bei 1778 dpi, Tonwert 15%; verwendete Rasterwinkelung = 30°) |
| 2 | Sicherheitsmerkmal | Schriftzug |
| | Variante D | Variante D: Im Bereich des Schriftzuges wurde bei gleichem Tonwert eine Rasterwinkelung von 45° anstelle von 30° verwendet. |

Auf diese Weise wurde eine Positivmatrize mit ca. 2600 Härchen/cm² erzeugt, welche über ein zusätzliches Sicherheitsmerkmal in Form eines Schriftzuges verfügte, der in Form von in einem anderen Winkel angeordneten Härchen abgebildet war.

Analog Beispiel 1 wurde mittels Umkehrbeschichtung eine Negativmatrize aus der Positivmatrize erzeugt, mit deren Hilfe eine Zurichtungsschicht hergestellt werden konnte, die mit der Oberfläche eines Spaltleders verbunden wurde.

Das erhaltende beschichtete Leder hatte eine optisch ansprechende, veloursartige Oberfläche mit sehr angenehmem Griff. Das Sicherheitsmerkmal Schriftzug konnte bei unterschiedlichen Licht-Einfallswinkeln unterschiedlich stark visuell erkannt werden, wobei die Haptik der Oberfläche in den Sicherheitsmerkmal-Bereichen nicht merklich abwich.

Ein mittels Mikroskop vergrößerter Oberflächenausschnitt der gravierten Positivmatrize ist in Figur 4 dargestellt.

### Beispiel 5

Es wurde eine lasergravierbare Schicht mit einer rauen Oberfläche auf Basis eines bei Raumtemperatur härtenden, füllstoffhaltigen 2-Komponenten-Silikonelastomers hergestellt, indem die beiden Komponenten intensiv miteinander vermischt und mit Hilfe einer Rakelbeschichtung auf eine temporäre mikroraue PET-Deckfolie aufgebracht wurden. Nach 16-stündigem Aushärten bei Raumtemperatur wurde die chemisch verstärkte elastomere Silikonschicht mit Hilfe eines Silikonklebers auf einem Polyestergewebe als Trägerelement fixiert. Die nach Entfernung der temporären mikrorauen PET-Deckfolie erhaltene verstärkte elastomere Schicht mit Gewebeträger wies eine Gesamtschichtdicke von 1,7 mm auf. Der erhaltende Schichtverbund ("Silikonmatrize") wurde vor der anschließenden Strukturierung mittels Laser in Plattenstücke von ca. 20 x 40 cm konfektioniert.

Die Silikonmatrize wurde auf einer Aufnahmetrommel für die Dauer der Gravur mit Hilfe von doppelseitigem Klebeband fixiert. Während des Gravurprozesses wurde die Gravurtrommel mit der zu bearbeitenden Silikonschicht gleichförmig relativ zum Laserstrahl in axialer Richtung verschoben. Auf diese Weise überstrich der Laserstrahl die gesamte zu bearbeitende Fläche der Matrize spiralförmig.

Die Silikonmatrize wurde mit folgendem Negativ-Motiv graviert. Dabei wurden die Bilddaten in jenen Motivbereichen, in denen das Sicherheitsmerkmal abgebildet werden sollte, wie in der Tabelle angegeben modifiziert.

| Motiv Nr. | Funktion | Motivtyp |
|---|---|---|
| 1 | kraterförmige | Näpfchen mit |
| | Vertiefungen | Durchmesser = 86 µm |
| | | Mittenabstand = 129 µm |
| | ('Näpfchen") | Höhe = ∼170 µm |
| | | (entspricht in 2-dim. Projektion einem invertierten autotypischen Raster von 77,5 l/cm bei 1778 dpi, Tonwert 35%; verwendete Rasterwinkelung = 30°) |
| 2 | Sicherheitsmerkmal | Schriftzug |
| | Variante D | Variante D: Im Bereich des Schriftzuges wurde bei gleichem Tonwert eine Rasterwinkelung von 45° anstelle von 30° verwendet. |

Auf diese Weise wurde eine Matrize mit ca. 6000 Näpfchen/cm² erzeugt, welche über ein zusätzliches Sicherheitsmerkmal in Form eines Schriftzuges verfügte, der in Form von in einem anderen Winkel angeordneten Härchen abgebildet war.

Anschließend wurde gemäß WO 2005/035795 eine wässrige, Mikrohohlkugeln enthaltende Kunststoffdispersion auf die Matrize aufgebracht und durch Entfernen des Wassers verfestigt. Die so erhaltene Kunststoff-Beschichtung wurde gemäß WO 2005/047549 mit Hilfe einer einzigen, eine netzartige Struktur aufweisenden Verbindungsschicht mit der Oberfläche eines Spaltleders verbunden.

Das erhaltende beschichtete Leder hatte eine optisch ansprechende, veloursartige Oberfläche mit äußerst angenehmem Griff. Das Sicherheitsmerkmal Schriftzug konnte bei unterschiedlichen Licht-Einfallswinkeln unterschiedlich stark visuell erkannt werden, ohne dass die Haptik der Oberfläche in den Sicherheitsmerkmal-Bereichen merklich abwich.

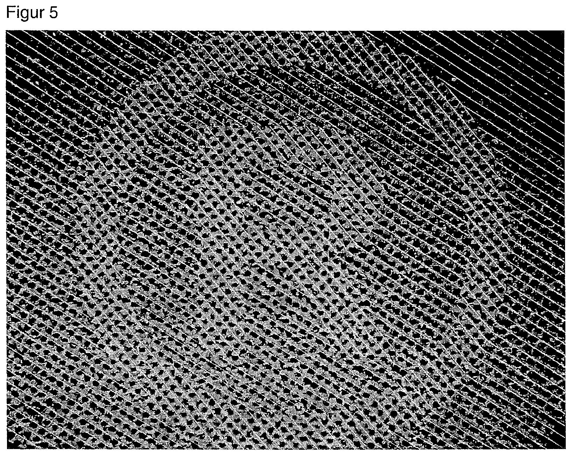

Ein mittels Mikroskop vergrößerter Oberflächenausschnitt der gravierten SilikonMatrize ist in Figur 5 dargestellt. Um die unterschiedliche Rasterwinkelung besser sichtbar zu machen, wurden weiße Hilfslinien eingezeichnet.

## Patentansprüche

1. Verfahren zur Herstellung einer Matrize für die Herstellung einer mit einem flächigen Träger, insbesondere einem Leder, einem Lederersatzstoff, einem Textilmaterial oder einer Holzoberfläche, verbindbaren oberflächenstrukturierten Beschichtungszurichtung wobei die Beschichtungszurichtung durch Auftragen eines flüssigen Kunststoffmaterials auf die Oberfläche der Matrize und anschließender Verfestigung des Kunststoffmaterials gebildet wird,
wobei die Matrize eine der Oberflächenstruktur der Beschichtung entsprechende Oberflächenstruktur aufweist.
wobei die Oberfläche auf einem Untergrund in einem Raster angeordnete Oberflächenstrukturelemente, welche als Erhebungen oder Vertiefungen ausgebildet sind, umfasst,
wobei die Oberflächenstruktur der Matrize eine markenmäßige Kennzeichnung mit einer von der Umgebung abweichenden Oberflächenstruktur aufweist,
und wobei die Kennzeichnung durch Oberflächenstrukturelemente mit von der Umgebung abweichender Größe, Geometrie und/oder Anordnung gebildet wird, oder die Kennzeichnung durch von der Umgebung der Kennzeichnung abweichender Rauhigkeit des Untergrunds (Oberflächen-Feinstruktur) gebildet wird,
wobei das Verfahren die folgenden Schritte aufweist:
a) Bereitstellen einer lasergravierbaren elastomeren Schicht oder eines Schichtverbunds umfassend eine lasergravierbare elastomere Schicht, gegebenenfalls auf einem Träger, wobei die lasergravierbare Schicht ein Bindemittel sowie weitere Zusatz- und Hilfsstoffe umfasst,
b) thermochemische, photochemische oder aktinische Verstärkung der lasergravierbaren elastomeren Schicht,
c) Eingravieren einer der Oberflächenstruktur der Zurichtung entsprechenden Oberflächenstruktur der Matrize in die lasergravierbare elastomere Schicht mit einem Laser.

2. Verfahren nach Anspruch 1, **dadurch gekennzeichnet, dass** die Kennzeichnung ein Schriftzug oder ein Logo ist.

3. Verfahren nach Anspruch 1 oder 2, **dadurch gekennzeichnet, dass** die Matrize eine Negativmatrize oder eine Positivmatrize ist.

4. Verfahren nach einem der Ansprüche 1 bis 3, **dadurch gekennzeichnet, dass** in die Matrize eine Oberflächenstruktur mit Strukturelementen, die Abmessungen im Bereich von 10 bis 500 µm aufweisen, eingraviert wird.

5. Verfahren nach Anspruch 3, **dadurch gekennzeichnet, dass** die Strukturelemente ausgewählt sind aus Kreisen, Ellipsen, Quadraten, Rauten, Dreiecken, Sternen sowie weiteren einfachen geometrischen Formen.

6. Verfahren nach Anspruch 3 oder 4, **dadurch gekennzeichnet, dass** die Strukturelemente ein regelmäßiges oder unregelmäßiges Raster bilden.

7. Verfahren nach einem der Ansprüche 3 bis 5, **dadurch gekennzeichnet, dass** die Matrize neben einer Oberflächen-Grobstruktur aus Oberflächenstrukturelementen eine Oberflächen-Feinstruktur aufweist, wobei sowohl Grob- als auch Feinstruktur durch Lasergravur erzeugt werden.

8. Negativ- oder Positivmatrize, erhältlich nach einem Verfahren gemäß einem der Ansprüche 1 bis 7.

9. Verfahren zur Herstellung einer eine Oberflächenstruktur aufweisenden Kunststoffschicht zur Beschichtung von Oberflächen mit den Schritten:
i) Herstellung einer Negativmatrize nach dem Verfahren gemäß einem der Ansprüche 1 bis 7,
ii) Aufbringen eines flüssigen Kunststoffmaterials auf die strukturierte Oberfläche der Negativmatrize und Verfestigenlassen des Kunststoffmaterials.

10. Verfahren zur Herstellung einer eine Oberflächenstruktur aufweisenden Kunststoffschicht zur Beschichtung von Oberflächen mit den Schritten:
i) Herstellung einer Positivmatrize nach dem Verfahren gemäß einem der Ansprüche 1 bis 7,
ii) Aufbringen einer Polymer-Zusammensetzung auf die strukturierte Oberfläche der Positivmatrize und Verfestigenlassen derselben, wobei eine elastomere Negativmatrize erhalten wird,
iii) Aufbringen eines flüssigen Kunststoffmaterials auf die strukturierte Oberfläche der Negativmatrize und Verfestigenlassen des Kunststoffmaterials.

11. Verfahren zum Zurichten von Leder und Lederersatzstoffen, umfassend die Schritte:
i) Herstellung einer Negativmatrize nach dem Verfahren gemäß einem der Ansprüche 1 bis 7, und
ii) Aufbringen eines flüssigen Kunststoffmaterials auf die strukturierte Oberfläche der Negativmatrize und Verfestigenlassen des Kunststoffmaterials,
oder
i) Herstellung einer Positivmatrize nach dem Verfahren gemäß einem der Ansprüche 1 bis 7, und
ii) Aufbringen einer Polymer-Zusammensetzung auf die strukturierte Oberfläche der Positivmatrize und Verfestigenlassen derselben, wobei eine elastomere Negativmatrize erhalten wird, und
iii) Aufbringen eines flüssigen Kunststoffmaterials auf die strukturierte Oberfläche der Negativmatrize und Verfestigenlassen des Kunststoffmaterials,
wobei jeweils eine eine Oberflächenstruktur aufweisende Kunststoffschicht erhalten wird, und
iv) Verbinden der Kunststoffschicht mit der von der oberflächenstrukturierten Seite abgewandten Seite mit der Oberfläche des Leders, wobei die Verbindung durch eine oder mehrere weitere Schichten bewirkt wird.

12. Verwendung einer Negativ- oder Positivmatrize, hergestellt nach dem Verfahren gemäß einem der Ansprüche 1 bis 7, in einem Verfahren zum Zurichten von Leder.

## Claims

1. A process for the production of a die for the production of a surface-structured coating finish which can be bonded to a sheet-like substrate, in particular a leather, an imitation leather material, a textile material or a wood surface, the coating finish being formed by application of a liquid plastic material to the surface of the die and subsequent solidification of the plastic material, the die having a surface structure corresponding to the surface structure of the coating, the surface comprising, on a substrate, surface structure elements which are arranged in a screen and are in the form of elevations or depressions, the surface structure of the die having a brand identification with a surface structure differing from the environment, and the identification being formed by surface structure elements having a size, geometry and/or arrangement differing from the environment, or the identification being formed by roughness of the substrate (fine surface structure) differing from the environment of the identification, the process having the following steps:
a) provision of a laser-engraveable elastomeric layer or a layer composite comprising a laser-engraveable elastomeric layer, optionally on a substrate, the laser-engraveable layer comprising a binder and further additives and assistants,
b) thermochemical, photochemical or actinic reinforcement of the laser-engraveable elastomeric layer and
c) engraving of a die surface structure corresponding to the surface structure of the finish into the laser-engraveable elastomeric layer using a laser.

2. The process according to claim 1, wherein the identification is an inscription or a logo.

3. The process according to claim 1 or 2, wherein the die is a negative die or a positive die.

4. The process according to any of claims 1 to 3, wherein a surface structure having structure elements which have dimensions in the range of from 10 to 500 µm is engraved into the die.

5. The process according to claim 3, wherein the structure elements are selected from circles, ellipses, squares, rhombuses, triangles, stars and further simple geometrical shapes.

6. The process according to claim 3 or 4, wherein the structure elements form a regular or irregular screen.

7. The process according to any of claims 3 to 5, wherein the die has a fine surface structure in addition to a coarse surface structure comprising surface structure elements, both coarse and fine structure being produced by laser engraving.

8. A negative or positive die obtainable by a process according to any of claims 1 to 7.

9. A process for the production of a plastic layer having a surface structure for the coating of surfaces, comprising the steps:
i) producing a negative die by the process according to any of claims 1 to 7,
ii) applying a liquid plastic material to the structured surface of the negative die and allowing the plastic material to solidify.

10. A process for the production of a plastic layer having a surface structure for the coating of surfaces, comprising the steps:
i) producing a positive die by the process according to any of claims 1 to 7,
ii) applying a polymer composition to the structured surface of the positive die and allowing said composition to solidify, an elastomeric negative die being obtained,
iii) applying a liquid plastic material to the structured surface of the negative die and allowing the plastic material to solidify.

11. A process for the finishing of leather and imitation leather materials, comprising the steps:
i) producing a negative die by the process according to any of claims 1 to 7, and
ii) applying a liquid plastic material to the structured surface of the negative die and allowing the plastic material to solidify,
or
i) producing a positive die by the process according to any of claims 1 to 7 and
ii) applying a polymer composition to the structured surface of the positive die and allowing said composition to solidify, an elastomeric negative die being obtained, and
iii) applying a liquid plastic material to the structured surface of the negative die and allowing the plastic material to solidify,
in each case a plastic layer having a surface structure being obtained, and
iv) bonding the plastic layer on the side facing away from the surface-structured side to the surface of the leather, the bond being produced by one or more further layers.

12. The use of a negative or positive die produced by the process according to any of claims 1 to 7 in a process for the finishing of leather.

## Revendications

1. Procédé de fabrication d'une matrice pour la fabrication d'un apprêt de revêtement structuré en surface pouvant être relié avec un support plat, notamment un cuir, un succédané de cuir, un matériau textile ou une surface en bois, l'apprêt de revêtement étant formé par application d'un matériau plastique liquide sur la surface de la matrice, puis solidification du matériau plastique,
la matrice présentant une structure de surface correspondant à la structure de surface du revêtement, la surface comprenant des éléments structuraux de surface agencés sur un substrat dans une trame, qui sont configurés sous forme de protubérances ou de creux,
la structure de surface de la matrice présentant un identificateur de marque ayant une structure de surface différente de l'environnement,
et l'identificateur étant formé par des éléments structuraux de surface avec une taille, une géométrie et/ou un agencement différents de l'environnement, ou l'identificateur étant formé par une rugosité du substrat (structure fine de surface) différente de l'environnement de l'identificateur,
le procédé comprenant les étapes suivantes :
a) la préparation d'une couche élastomère pouvant être gravée par laser ou d'un composite de couches comprenant une couche élastomère pouvant être gravée par laser, éventuellement sur un support, la couche pouvant être gravée par un laser comprenant un liant, ainsi que d'autres additifs et adjuvants,
b) le renforcement thermochimique, photochimique ou actinique de la couche élastomère pouvant être gravée par laser,
c) la gravure d'une structure de surface de la matrice correspondant à la structure de surface de l'apprêt dans la couche élastomère pouvant être gravée par laser avec un laser.

2. Procédé selon la revendication 1, **caractérisé en ce que** l'identificateur est un paraphe ou un logo.

3. Procédé selon la revendication 1 ou 2, **caractérisé en ce que** la matrice est une matrice négative ou une matrice positive.

4. Procédé selon l'une quelconque des revendications 1 à 3, **caractérisé en ce qu'**une structure de surface à éléments structuraux présentant des dimensions dans la plage allant de 10 à 500 µm est gravée dans la matrice.

5. Procédé selon la revendication 3, **caractérisé en ce que** les éléments structuraux sont choisis parmi les cercles, les ellipses, les carrés, les losanges, les triangles, les étoiles, ainsi que d'autres formes géométriques simples.

6. Procédé selon la revendication 3 ou 4, **caractérisé en ce que** les éléments structuraux forment une trame régulière ou irrégulière.

7. Procédé selon l'une quelconque des revendications 3 à 5, **caractérisé en ce que** la matrice présente en plus d'une structure de surface grossière constituée par des éléments structuraux de surface également une structure de surface fine, aussi bien la structure grossière que la structure fine étant formées par gravure laser.

8. Matrice négative ou positive, pouvant être obtenue par un procédé selon l'une quelconque des revendications 1 à 7.

9. Procédé de fabrication d'une couche de plastique présentant une structure de surface pour le revêtement de surfaces, comprenant les étapes suivantes :
i) la fabrication d'une matrice négative par le procédé selon l'une quelconque des revendications 1 à 7,
ii) l'application d'un matériau plastique liquide sur la surface structurée de la matrice négative et la solidification du matériau plastique.

10. Procédé de fabrication d'une couche de plastique présentant une structure de surface pour le revêtement de surfaces, comprenant les étapes suivantes :
i) la fabrication d'une matrice positive par le procédé selon l'une quelconque des revendications 1 à 7,
ii) l'application d'une composition polymère sur la surface structurée de la matrice positive et la solidification de celle-ci, une matrice négative élastomère étant obtenue,
iii) l'application d'un matériau plastique liquide sur la surface structurée de la matrice négative et la solidification du matériau plastique.

11. Procédé de revêtement de cuirs et de succédanés de cuir, comprenant les étapes suivantes :
i) la fabrication d'une matrice négative par le procédé selon l'une quelconque des revendications 1 à 7, et
ii) l'application d'un matériau plastique liquide sur la surface structurée de la matrice négative et la solidification du matériau plastique,
ou
i) la fabrication d'une matrice positive selon l'une quelconque des revendications 1 à 7, et
ii) l'application d'une composition polymère sur la surface structurée de la matrice positive et la solidification de celle-ci, une matrice négative élastomère étant obtenue, et
iii) l'application d'un matériau plastique liquide sur la surface structurée de la matrice négative et la solidification du matériau plastique,
une couche de plastique présentant une structure de surface étant obtenue à chaque fois, et
iv) la liaison de la couche de plastique avec le côté opposé au côté structuré en surface avec la surface du cuir, la liaison étant effectuée par une ou plusieurs autres couches.

12. Utilisation d'une matrice négative ou positive, fabriquée par le procédé selon l'une quelconque des revendications 1 à 7, dans un procédé de revêtement de cuir.
